# EUROPEAN PATENT APPLICATION

(11) **EP 4 016 397 A1**
(43) Date of publication of application: **22.06.2022**
(21) Application number: 20801135.3
(22) Date of filing: 23.10.2020
(51) Int. Cl.: G06N 3/08, G06N 3/04

(54) **SERVICE GENERATION METHOD**

(30) Priority: 22.10.2020 KR 20200137444
(71) Applicant: MINDS LAB INC., Yuseong-gu, Daejeon 34111 (KR)
(72) Inventor: YOO, Tae Joon, Jung-gu, Incheon 22324 (KR); JOE, Myun Chul, Seongnam-si, Gyeonggi-do 13610 (KR); CHOI, Hong Seop, Seongnam-si, Gyeonggi-do 13602 (KR)
(74) Representative: Loyer & Abello
(86) International application number: PCT/KR2020/014551
(87) International publication number: WO 2022/085829

(57) **Abstract**

A method of generating a service by using an artificial neural network model includes: a data processing step of pre-processing training data; a model training step of training the artificial neural network model based on the preprocessed training data; and a service making step of receiving an input for editing one or more components included in the service and an input for setting a connection relationship between the one or more components. The one or more components include the artificial neural network model.

## Description

### CROSS-REFERENCE TO RELATED APPLICATION

This application is based on and claims priority under 35 U.S.C. §119 to Korean Patent Application No. 10-2020-0137444, filed on October 22, 2020, in the Korean Intellectual Property Office, the disclosure of which is incorporated by reference herein in its entirety.

### BACKGROUND

### 1. Field

One or more embodiments relate to a method of generating a personalized service by using user's training data and an artificial neural network model selected by a user.

### 2. Description of the Related Art

With the recent development and dissemination of artificial intelligence technology, attempts to introduce artificial intelligence in various fields have gradually increased. However, in order to introduce artificial intelligence in relation to existing services, there are a number of problems that must be solved, which slows the introduction of artificial intelligence.

More specifically, in order to introduce artificial intelligence in relation to existing services, there is a fundamental problem in that a new artificial intelligence developer must be employed and the overall costs are high. In addition, even if artificial intelligence is introduced, the result will not be satisfactory, and thus, there is a problem in that the level of service would not significantly improve compared to before the introduction of artificial intelligence.

Assuming that it is intended to directly hire artificial intelligence developers, the problem is that there are currently not many artificial intelligence developers. Thus, a high salary is required for hiring such developers, and in the case of small companies, it is more difficult to hire competent artificial intelligence developers.

In addition, there is a problem in that the existing management personnel does not have high knowledge related to artificial intelligence, and thus, there is a high possibility that communication with the artificial intelligence developer does not work smoothly, and due to this, the service cannot be developed to a desired level.

In order to solve this problem, plans to develop a service using artificial intelligence in the form of outsourcing have been considered, but such plans still require high costs and have many problems in that future maintenance is practically impossible.

As described above, in order to introduce artificial intelligence in relation to existing services, there are many problems to be solved, and thus, many companies have no actively introduced artificial intelligence, and the speed at which artificial intelligence is introduced throughout the industry has not increased.

### SUMMARY

One or more embodiments refer to a high-level artificial intelligence utilization service without specialized knowledge of artificial intelligence.

Additional aspects will be set forth in part in the description which follows and, in part, will be apparent from the description, or may be learned by practice of the presented embodiments of the disclosure.

A method of generating a service by using an artificial neural network model includes a data processing step of pre-processing training data, a model training step of training the artificial neural network model based on the preprocessed training data, and a service making step of receiving an input for editing one or more components included in the service and an input for setting a connection relationship between the one or more components. The one or more components include the artificial neural network model.

The data processing step may include obtaining the training data, and generating pre-processed training data including input data and output data based on the training data and a user's input.

The generating the pre-processed training data may include generating visualization data corresponding to the training data, and generating at least one of the input data and the output data based on a user's input in response to the visualization data.

The generating the pre-processed training data may include providing an analysis result with respect to a portion of the visualization data corresponding to the user's input, and generating at least one of the input data and the output data based on a user's input in response to the analysis result.

The model training step may include providing a first interface for selecting a type of the artificial neural network model, and providing a second interface for setting at least one parameter for the artificial neural network model according to the selected type.

The model training step may further include providing a third interface for providing the pre-processed training data in a form in which input data and output data correspond to each other.

The model training step may further include providing a fourth interface for inputting test input data to the artificial neural network model and providing test output data for the test input data.

The service making step may include providing a fifth interface displaying objects respectively corresponding to one or more candidate components that are addable to the service, and providing a sixth interface listing objects corresponding to one or more components included in the service.

The service making step may further include adding an object selected from the fifth interface to the sixth interface, and adding a component corresponding to the selected object to the service, and associating a component corresponding to the first object and a component corresponding to the second object according to a user's input connecting the first object and the second object to each other on the sixth interface.

The associating the component corresponding to the first object and the component corresponding to the second object may include determining output data of the component corresponding to the first object as input data of the component corresponding to the second object.

The service making step may further include providing a seventh interface for setting at least one attribute value of a component corresponding to an object selected from one of the fifth interface and the sixth interface, and changing an attribute value of the component corresponding to the selected object according to a user's input to the seventh interface.

The one or more candidate components may include an artificial neural network model trained based on the pre-processed training data.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram schematically illustrating a configuration of an artificial intelligence service generation system according to an embodiment;
FIG. 2 is a diagram schematically illustrating a configuration of a server according to an embodiment;
FIG. 3 is a diagram illustrating a process of generating pre-processed training data when training data is voice data;
FIG. 4 is a diagram illustrating a process of generating pre-processed training data when training data is image data;
FIG. 5 shows an example of a screen providing a first interface to a first user terminal;
FIG. 6 shows an example of a screen providing a second interface to a first user terminal;
FIG. 7 is a diagram illustrating a screen on which interfaces for generating a service according to a user's input are displayed; and
FIGS. 8 and 9 are flowcharts illustrating a service generation method performed by a controller according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

A method of generating a service by using an artificial neural network model according to an embodiment includes a step of data processing for pre-processing training data, a step of model training for training the artificial neural network model based on the pre-processed training data, a step of service making for receiving an input for editing one or more components included in the service and an input for setting a connection relationship among the one or more components. At this time, the one or more components may include the artificial neural network model.

The present disclosure may include various embodiments and modifications, and specific embodiments thereof will be illustrated in the drawings and will be described herein in detail. The effects and features of the present disclosure and the accompanying methods thereof will become apparent from the following description of the embodiments, taken in conjunction with the accompanying drawings. However, the present disclosure is not limited to the embodiments described below, and may be embodied in various modes.

Reference will now be made in detail to embodiments, examples of which are illustrated in the accompanying drawings. In the drawings, the same elements are denoted by the same reference numerals, and a repeated explanation thereof will not be given.

It will be understood that although the terms "first," "second," etc. may be used herein to describe various elements, these elements should not be limited by these terms. These elements are only used to distinguish one element from another. As used herein, the singular forms "a," "an," and "the" are intended to include the plural forms as well, unless the context clearly indicates otherwise. It will be understood that terms such as "comprise," "include," and "have" used herein specify the presence of stated features or elements, but do not preclude the presence or addition of one or more other features or elements. Sizes of elements in the drawings may be exaggerated or contracted for convenience of explanation. In other words, because sizes and shapes of elements in the drawings are arbitrarily illustrated for convenience of explanation, the following embodiments are not limited thereto.

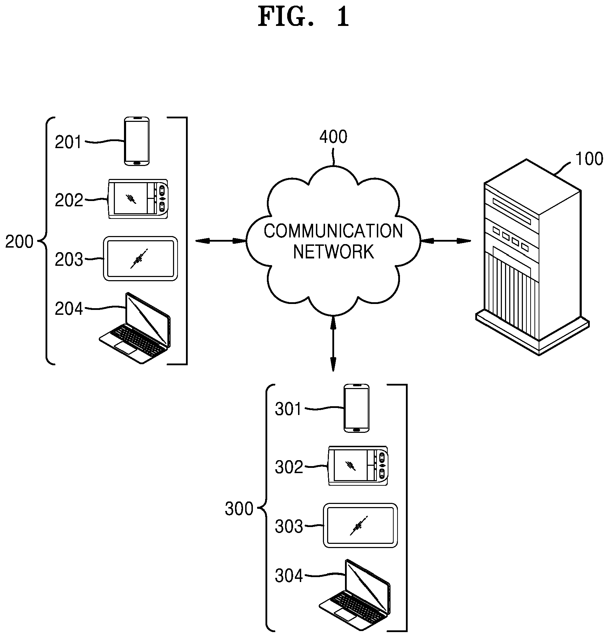

FIG. 1 is a diagram schematically illustrating a configuration of an artificial intelligence service generation system according to an embodiment.

The artificial intelligence service generation system according to an embodiment may pre-process a user's training data so as to be used for training an artificial neural network.

In addition, the artificial intelligence service generation system according to an embodiment may train an artificial neural network model selected by the user by using the user's training data.

In addition, the artificial intelligence service generation system according to an embodiment allows the user to edit one or more components constituting an artificial intelligence service, and in this case, the artificial neural network model generated by the user is included as a component.

As described above, one or more embodiments enable a user to perform a series of processes of generating a service using artificial intelligence from his or her own training data.

The artificial intelligence service generation system according to an embodiment may include a server 100, a first user terminal 200, a second user terminal 300, and a communication network 400, as shown in FIG. 1.

The first user terminal 200 and the second user terminal 300 according to an embodiment may mean devices of various types that mediate users and the server 100 so that the users may use various services provided by the server 100.

In an embodiment, the first user terminal 200 may be a terminal of a user who manufactures an artificial intelligence service. Therefore, the first user terminal 200 may display interfaces for generating an artificial intelligence service based on data received from the server 100.

In an embodiment, a second user terminal 300 may be a terminal of a service user using the generated artificial intelligence service. Accordingly, the second user terminal 300 may provide a service generated by the user of the first user terminal 200 based on data received from the server 100.

Such user terminals 200 and 300 may refer to portable terminals 201 to 203 and 301 to 303 as shown in FIG. 1, or may refer to computers 204 and 304.

The user terminals 200 and 300 according to an embodiment may include a display means for displaying content, etc. to perform the above-described functions, and an input means for obtaining a user's input for such content. In this case, the input means and the display means may be configured in various ways. For example, the input means may include a keyboard, a mouse, a trackball, a microphone, a button, and a touch panel, but are not limited thereto.

In FIG. 1, both of the first user terminal 200 and the second user terminal 300 are shown as being singular, but such quantities are exemplary and the spirit of embodiments is not limited thereto. Therefore, each of the first user terminal 200 and the second user terminal 300 may be plural.

The communication network 400 according to an embodiment may mean a means for mediating data transmission/reception between components of the system. This communication network 400 may include wired networks such as Local Area Networks (LANs), Wide Area Networks (WANs), Metropolitan Area Networks (MANs), Integrated Service Digital Networks (ISDNs), and the like, or wireless networks such as wireless LANs, code-division multiple access (CDMA), Bluetooth, satellite communication, and the like. However, the scope of the present disclosure is not limited thereto.

The server 100 according to an embodiment enables a user of the first user terminal 200 to perform a series of processes of generating a service using artificial intelligence from his or her own training data. For example, the server 100 may pre-process the user's training data so that the user's training data may be used for training an artificial neural network. The server 100 may train an artificial neural network model selected by the user by using the user's training data. The server 100 allows the user to edit one or more components constituting an artificial intelligence service, and in this case, an artificial neural network model generated by the user may be included as a component.

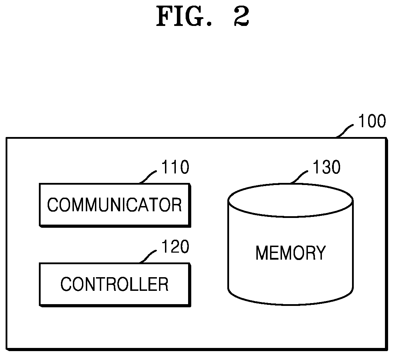

FIG. 2 is a diagram schematically illustrating a configuration of the server 100 according to an embodiment.

Referring to FIG. 2, the server 100 according to an embodiment may include a communicator 110, a controller 120, and a memory 130. Further, although not shown in the drawings, the server 100 according to an embodiment may further include an input/output unit, a program storage unit, and the like.

The communicator 110 may be a device including hardware and software necessary for the server 100 to transmit and receive signals such as control signals or data signals through wired/wireless connection with other network devices such as the user terminals 200 and 300.

The controller 120 may include all kinds of devices capable of processing data, such as a processor. Here, the "processor" may refer to, for example, a data processing device embedded in hardware having a circuit physically structured to perform a function represented by a code or command included in a program. As an example of such a data processing device built into the hardware, processing devices such as a microprocessor, a central processing unit (CPU), a processor core, a multiprocessor, and an application-specific integrated circuit (ASIC), and a field programmable gate array (FPGA) may be covered, but the scope of embodiments is not limited thereto.

The memory 130 temporarily or permanently stores the data processed by the server 100. The memory may include a magnetic storage medium or a flash storage medium, but the scope of embodiments is not limited thereto. For example, the memory 130 may temporarily and/or permanently store parameters related to an artificial neural network model generated by a user.

Hereinafter, a description will be made focusing on the process of generating an artificial intelligence service by the controller 120 of the server 100.

### 1. Data pre-processing

The controller 120 according to an embodiment may pre-process a user's training data and convert the pre-processed training data into a form suitable for training an artificial neural network model.

In the present disclosure, "training data" refers to data used for training an artificial neural network model, which includes input data and output data that are correlated with each other, but is not written in a format for training an artificial neural network model. For example, the training data may be voice data including a plurality of voice sections, or may be image data including a plurality of types of objects to be recognized. In this way, the training data includes data for training the artificial neural network model, but may mean raw data (or original data) that has not been processed in a form suitable for training the artificial neural network model.

In the present disclosure, the "artificial neural network model" may refer to models of various types that is trained as to a correlation between input data and output data based on training data. Such an artificial neural network model may include artificial neurons (nodes) that form a network by combining synapses. In addition, the artificial neural network model may generate output data by appropriately learning the weights of individual artificial neurons (nodes) through training and reflecting the learned weights of individual artificial neurons (nodes) in input data.

Such an artificial neural network model may be implemented as a convolutional neural network (CNN) model, a recurrent neural network (RNN) model, and a long short-term memory (LSTM) model, for example. However, the aforementioned artificial neural network models are examples, and a model capable of being trained as to the correlation between input and output based on training data may correspond to the artificial neural network model of the present disclosure.

Looking at a process in which the controller 120 pre-processes the training data according to an embodiment in more detail, first, the controller 120 may obtain training data to be pre-processed.

In an embodiment, the controller 120 may obtain training data from the first user terminal 200. For example, the controller 120 according to an embodiment may provide an interface for uploading data to the first user terminal 200 and receive training data uploaded by a first user through the interface.

In another embodiment, the controller 120 may obtain training data from an external device (not shown). For example, the controller 120 according to another embodiment may receive training data from a data providing server (not shown) input or selected by a user. In this case, the data providing server (not shown) may be a server that provides a learning data sales service to a user or may be a server that provides available and/or public training data.

In addition, the controller 120 according to another embodiment may receive training data from a web page input by a user.

However, the above-described training data obtaining methods are exemplary, and the spirit embodiments is not limited thereto.

The controller 120 according to an embodiment may generate pre-processed training data including input data and output data based on training data obtained according to the above-described process and user input.

As described above, the "training data" may refer to data that includes input data and output data, but is not prepared in a format for training an artificial neural network model. Therefore, in order to use such training data for training an artificial neural network model, it may be necessary to convert the training data into a form suitable for training.

In an embodiment, the controller 120 may generate visualization data of training data, and may generate at least one of input data and output data based on a user's input for the generated visualization data. In this case, the controller 120 according to an embodiment may provide an analysis result with respect to a portion corresponding to the user's input in the visualization data. In addition, the controller 120 may generate at least one of input data and output data based on a user's input for the provided analysis result.

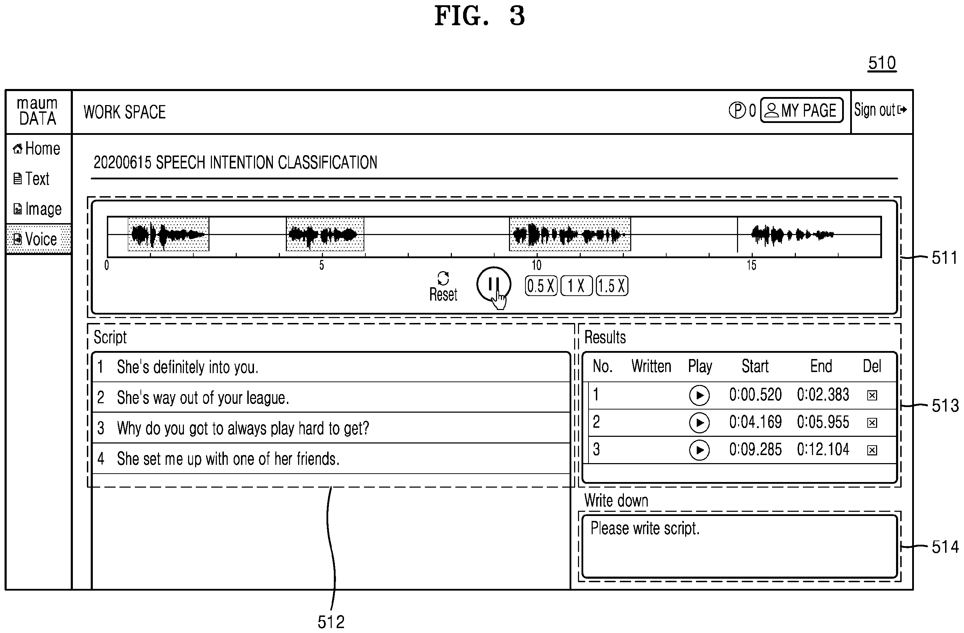

FIG. 3 is a diagram illustrating a process of generating pre-processed training data when training data is voice data.

For convenience of explanation, it is assumed that voice data is included in the training data, and a screen 510 shown in FIG. 3 is displayed on the first user terminal 200. In addition, it is assumed that input data included in the pre-processed training data is voice data, and that output data is text data corresponding to the voice data.

Under the above-described premise, the controller 120 according to an embodiment may generate visualization data from the voice data. For example, the controller 120 may generate visualization data in the form of a graph shown in a visualization data display area 511 of FIG. 3 from the voice data. In this case, the visualization data in the form of a graph may show a pitch, volume, frequency, etc. of the sound of the voice data over time. However, this is merely an example and the spirit of embodiments is not limited thereto.

The controller 120 according to an embodiment may generate at least one of input data and output data based on a user's input for visualization data. For example, according to an input of a user selecting at least a partial section of the visualization data in the form of a graph shown in the visualization data display area 511, the controller 120 may generate input data based on voice data included in the corresponding section. For example, the controller 120 may generate input data including only voice data included in the corresponding section.

The controller 120 according to an embodiment may provide an analysis result with respect to a portion corresponding to the user's input in the visualization data. For example, as shown in an analysis result display area 512 of FIG. 3, the controller 120 may provide a result of converting voice data included in a user-selected section into text as an analysis result. At this time, the controller 120 according to an embodiment may convert the voice data into text data by using various known techniques.

In an optional embodiment, the user may select a plurality of discontinuous sections in the visualization data display area 511, and the controller 120 may generate input data corresponding to each individual section. In addition, the controller 120 may provide text data corresponding to each input data to the analysis result display area 512.

The controller 120 according to an embodiment may generate at least one of input data and output data based on a user's input for the provided analysis result. For example, the controller 120 may select text data provided in the analysis result display area 512 and select (or confirm) the text data as output data.

In addition, the controller 120 may select text data provided in the analysis result display area 512, load it into an editing area 514, edit it, and then select (or confirm) the edited text data as output data. However, such a method is merely exemplary, and the spirit of embodiments is not limited thereto.

In an optional embodiment, the controller 120 may provide the generated input data and output data in correspondence with each other. For example, the controller 120 may display individual input data-related information and output data-related information in correspondence with each other through a data status display area 513. For example, in displaying the input data, the controller 120 may display information on a section in which the input data is located in the training data, and an interface for reproducing a voice in the section. In addition, when displaying the output data, the controller 120 may display text data generated from the input data. However, this is merely an example and the spirit of embodiments is not limited thereto.

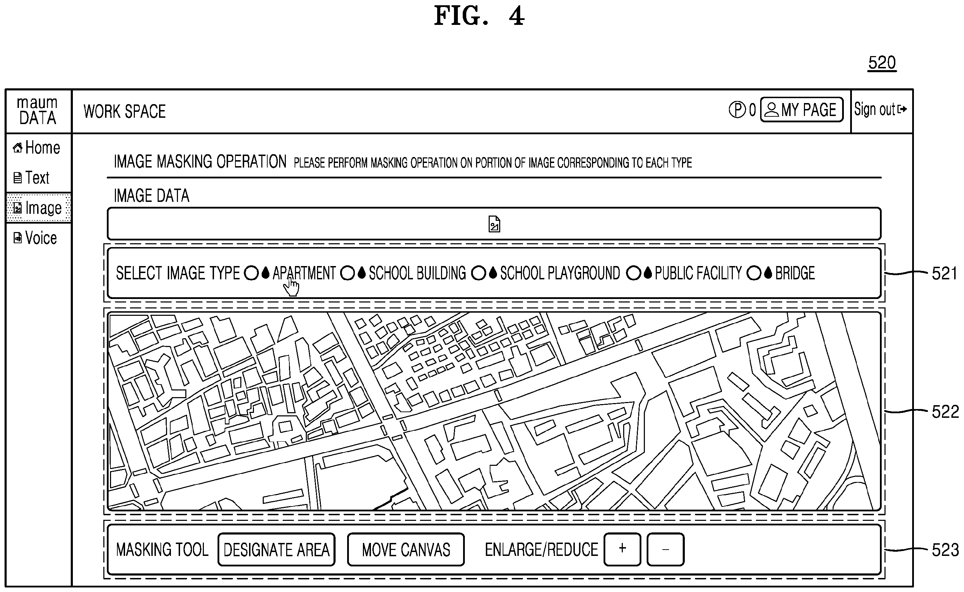

FIG. 4 is a diagram illustrating a process of generating pre-processed training data when training data is image data.

For convenience of explanation, it is assumed that image data is included in the training data, and a screen 520 shown in FIG. 4 is displayed on the first user terminal 200. In addition, it is assumed that the input data included in the pre-processed training data is image data, and that the output data is selection information of at least a portion of the image data and a tag for the corresponding area.

Under the above-described premise, the controller 120 according to an embodiment may generate visualization data from the image data. For example, the controller 120 may correct the image data according to a preset method to generate visualization data in the form of an image shown in a visualization data display area 522 of FIG. 4.

In this case, "correcting according to a preset method" may mean changing at least one attribute value of an image to a preset value. For example, "correcting according to a preset method" may mean changing the sharpness of an image to a preset value or changing the size of an image to a preset value. However, this is merely an example and the spirit of embodiments is not limited thereto.

The controller 120 according to an embodiment may generate at least one of input data and output data based on a user's input for visualization data. For example, in the case where the user selects at least a partial area of the image shown in the visualization data display area 522 and inputs (or selects) a tag for the selected area, the controller 120 generates output data including feature information and tags for the area. In this case, the user selects at least a partial area of the image shown in the visualization data display area 522 and selects any one of the tags displayed on a tag selection area 521 to select an area and input a tag for the corresponding area. In other words, the controller 120 according to an embodiment generate output data based on a user's input of selecting any one of the tags displayed in the tag selection area 521 and a user's input of selecting at least a partial area of the image shown in the visualization data display area 522.

In an optional embodiment, the controller 120 may provide tools necessary for generating output data together. For example, as displayed on a tool display area 523, the controller 120 may provide a tool for enlarging or reducing the visualization data, a tool for changing a display portion of the visualization data, and the like. However, such tools are exemplary, and the spirit of embodiments is not limited thereto.

Meanwhile, in FIGS. 3 and 4, the case where the training data is voice data and image data is described as an example, but the spirit of embodiments is not limited thereto. For example, even when the training data is text data, the controller 120 according to an embodiment may generate visualization data corresponding to the text data, and receives at least one of input data and output data based on a user's input in response to the visualization data.

Hereinafter, a process in which the controller 120 trains an artificial neural network model will be described on the assumption that training data pre-processed according to the above-described process is generated.

### 2. Training an artificial neural network model

The controller 120 according to an embodiment may train an artificial neural network model by using training data pre-processed according to the above-described process (hereinafter sometimes referred to as "pre-processed data").

To this end, the controller 120 according to an embodiment may provide a first interface for selecting a type of an artificial neural network model to be trained. Further, the controller 120 may provide a second interface for setting at least one parameter for an artificial neural network model according to a type selected from the first interface.

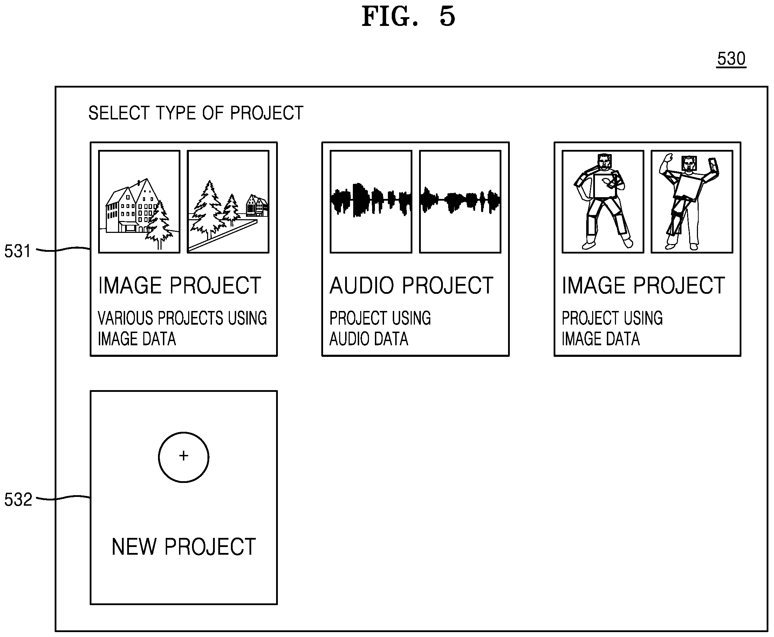

FIG. 5 is an example of a screen 530 providing a first interface to the first user terminal 200.

The controller 120 according to an embodiment may provide a first interface listing types of artificial neural network models selectable by a user to the first user terminal 200 as shown in FIG. 5.

The user may select an appropriate type from the listed types considering the type of data used in a service he/she intends to generate and a method of processing the data. For example, when a user wants to generate a service using image data, a first type 531 may be selected.

In addition, when there is no type corresponding to the service to be created, the user may select a fourth type 532 to generate a personalized artificial neural network model type.

However, a configuration of the first interface shown in FIG. 5 is exemplary, and the spirit of embodiments is not limited thereto.

The controller 120 according to an embodiment may provide a second interface for setting at least one parameter of an artificial neural network model according to a type selected from the first interface.

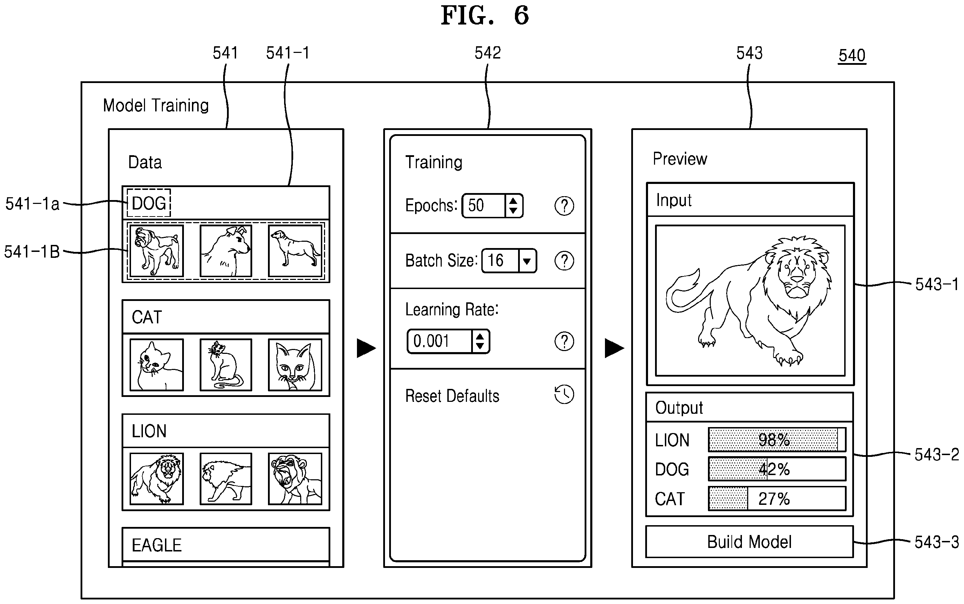

FIG. 6 is an example of a screen 540 providing a second interface 542 to the first user terminal 200.

The controller 120 according to an embodiment may provide the second interface 542 for setting at least one parameter for an artificial neural network model according to a type selected from the first interface. For example, the controller 120 may provide the second interface 542 including an interface for setting an epoch of an artificial neural network model, an interface for setting a batch size, and an interface for setting a learning rate.

Meanwhile, the controller 120 according to an embodiment may provide a third interface 541 in which input data and output data included in pre-processed data are displayed in a form corresponding to each other along with the second interface 542 described above.

For example, in providing first pre-processed data 541-1, the controller 120 may associate input data 541-1b with output data 541-1a as shown in FIG. 6 and display them. Of course, the controller may provide the remaining pre-processed data in the same manner as the first pre-processed data 541-1. However, the display format illustrated in FIG. 6 is exemplary, and a method of providing the third interface is not limited thereto.

The controller 120 according to an embodiment may provide a fourth interface 543 for inputting test input data to an artificial neural network model and providing test output data for the input test input data.

The controller 120 according to an embodiment may provide the fourth interface 543 together with at least one of the aforementioned second and third interfaces, or may provide only the fourth interface 543 alone.

Meanwhile, as shown in FIG. 6, the fourth interface 543 may include an interface 543-1 to which the user inputs test input data or in which the input test input data is displayed, an interface 543-2 in which test output data corresponding to the input test data is displayed, and an interface 543-3 for finally generating an artificial neural network model.

In displaying the test output data on the interface 543-2, the controller 120 according to an embodiment may display a plurality of pieces of output data, but may also display a probability that each output data is a correct answer.

Meanwhile, as a user input to the interface 543-3 is obtained according to an embodiment, a type of the artificial neural network model selected in the first interface may be set according to the parameter set in the second interface 542, and the artificial neural network model may be trained using pre-processed training data displayed on the third interface 541. The trained artificial neural network model may be used as a component constituting a service in generating a service, and a detailed description thereof will be described later below.

The controller 120 according to an optional embodiment may allocate a resource to be used in training an artificial neural network model or a resource to be used in driving a service using the trained artificial neural network model according to a preset rule.

At this time, the "preset rule" may be a rule in which a size of a resource is adjusted, the resource being allocated based on at least one of the presence or absence of billing for the first user terminal 200, the amount of billing, the amount of idle resources managed by the server 100, the idle schedule, and the size (or volume) of the pre-processed training data.

Hereinafter, a method of generating a service by using an artificial neural network model according to the above-described process will be described.

### 3. Service generation

The controller 120 according to an embodiment may generate a service according to an input for editing one or more components constituting a service and an input for setting a connection relationship between the one or more components. In this case, the artificial neural network model trained according to the above-described process may correspond to one of the components of the service.

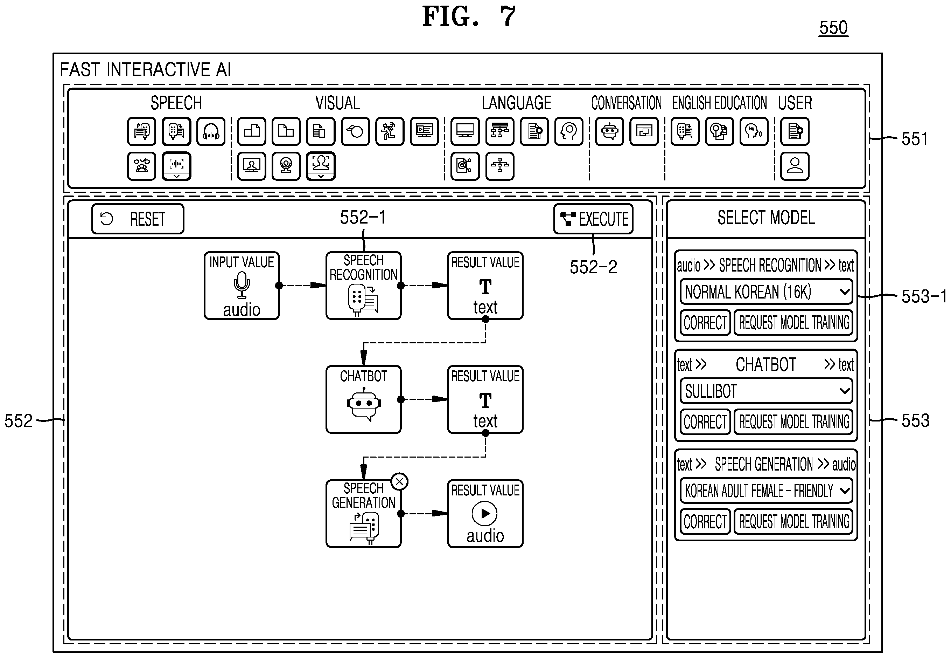

FIG. 7 is a diagram illustrating a screen 550 on which interfaces 551, 552, and 553 for generating a service according to a user's input are displayed.

The controller 120 according to an embodiment may provide a fifth interface 551 in which objects corresponding to one or more candidate components that may be added to a service are displayed.

In addition, the controller 120 according to an embodiment may provide a sixth interface 552 in which objects corresponding to one or more components constituting a service are listed. At this time, the fifth interface 551 and the sixth interface 552 may be provided together as shown in FIG. 7.

The controller 120 according to an embodiment may add an object selected from the fifth interface 551 to the sixth interface 552, and add a component corresponding to the selected object to a service being generated. For example, the controller 120 adds a voice recognition object 552-1 to the sixth interface 552 according to a user's input to the fifth interface 551, and may thus add a component corresponding to the voice recognition object 552-1 to the service.

In an optional embodiment, the controller 120 may add the object to the sixth interface 552 according to a user's input of dragging an object selected from the fifth interface 551 to the sixth interface 552. Even in this case, the controller 120 may add a component corresponding to the voice recognition object 552-1 to the service being generated.

Meanwhile, the fifth interface 551 may include an object corresponding to an artificial neural network model generated according to the above-described process. A user may generate a service based on an artificial neural network by adding the object to the service.

The controller 120 according to an embodiment associates a component corresponding to a first object with a component corresponding to a second object according to an input of a user connecting the first object and the second object to each other on the sixth interface 552. For example, the controller 120 may determine output data of the component corresponding to the first object as input data of the component corresponding to the second object according to an input of a user connecting the first object and the second object to each other.

For example, when an object that obtains speech according to a user's input and an artificial neural network model object that generates text corresponding to the speech are related to each other, the controller 120 may determine the obtained speech data as input data of the artificial neural network model. However, this is merely an example and the spirit of embodiments is not limited thereto.

The controller 120 according to an embodiment may execute a service according to a user's input to an execution button 552-2 on the sixth interface 552. In this case, the controller 120 according to an embodiment may sequentially execute a component corresponding to each object considering a connection relationship between the objects on the sixth interface 552.

In an optional embodiment, when a service is executed according to a user's input to the execution button 552-2, the controller 120 may display an object corresponding to the currently executed service component to be distinguished from the other objects. For example, the controller 120 may highlight and display the object corresponding to a service component currently being executed.

In addition, in an optional embodiment, the controller 120 may display an object corresponding to a service component, input data of the component, and output data of the component together.

The controller 120 according to an embodiment may provide a seventh interface 553 for setting at least one attribute value of a component corresponding to an object selected from one of the fifth interface 551 and the sixth interface 552. At this time, the fifth interface 551, the sixth interface 552, and the seventh interface 553 may be provided together as shown in FIG. 7.

The user may change the attribute values of individual components constituting the service through the seventh interface 553. For example, the user may change the attribute value of the voice recognition object 552-1 through an interface 553-1. However, this is merely an example and the spirit of embodiments is not limited thereto.

The controller 120 according to an embodiment may change an attribute value of a component corresponding to a selected object according to a user's input to the seventh interface 553.

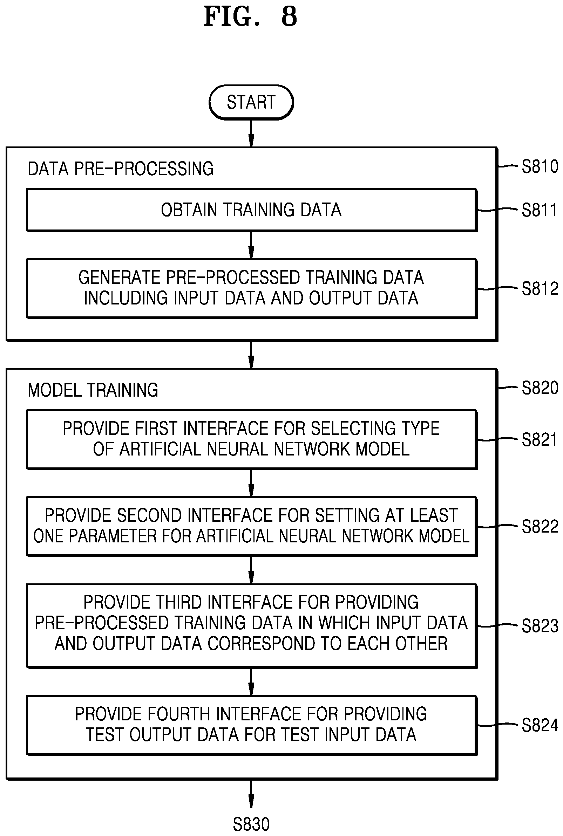

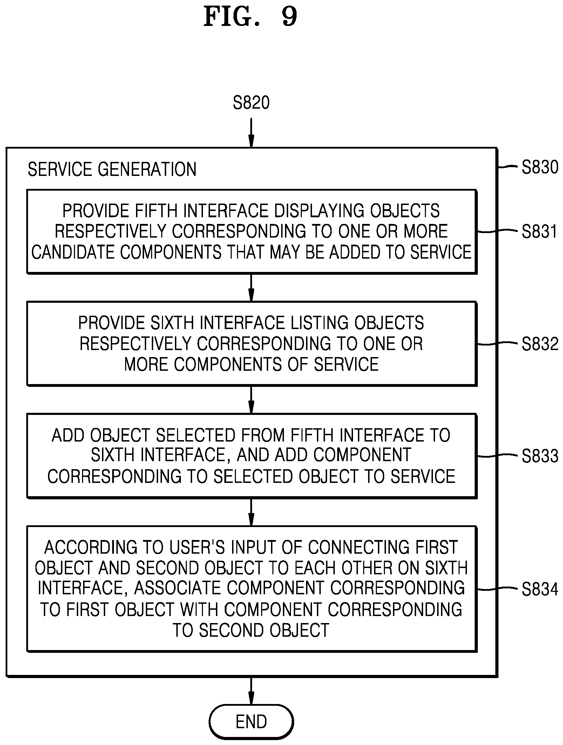

FIGS. 8 and 9 are flowcharts illustrating a service generation method performed by the controller 120 according to an embodiment. Hereinafter, the flowcharts of FIGS. 8 and 9 will be described with reference to FIGS. 1 to 7; however, overlapping content with the description of FIGS. 1 to 7 will be omitted.

The controller 120 according to an embodiment may pre-process the user's training data and convert it into a form appropriate for training the artificial neural network model, in operation S810.

With regard to a process in which the controller 120 pre-processes training data according to an embodiment in more detail, the controller 120 may first obtain training data to be pre-processed, in operation S811.

In an embodiment, the controller 120 may obtain training data from the first user terminal 200. For example, the controller 120 according to an embodiment may provide an interface for uploading data to the first user terminal 200 and receive training data uploaded by the first user through the interface.

In another embodiment, the controller 120 may obtain training data from an external device (not shown). For example, the controller 120 according to another embodiment may receive training data from a data providing server (not shown) input or selected by the user. In this case, the data providing server (not shown) may be a server providing a training data sales service to the user, or may be a server providing available and/or public training data.

In addition, the controller 120 according to another embodiment may receive training data from a web page input by the user.

However, the above-described training data obtaining methods are examples, and the spirit the present disclosure is not limited thereto.

The controller 120 according to an embodiment may generate pre-processed training data including input data and output data based on training data obtained according to the above-described process and a user's input, in operation S812.

As described above, the "training data" may refer to data that includes input data and output data, but is not prepared in a format for training an artificial neural network model. Therefore, in order to use such training data for training an artificial neural network model, it may be necessary to convert the training data into a form appropriate for training.

In an embodiment, the controller 120 may generate visualization data of the training data, and may generate at least one of input data and output data based on a user's input in response to the generated visualization data. In this case, the controller 120 according to an embodiment may provide an analysis result with respect to a portion of the visualization data that corresponds to the user's input. In addition, the controller 120 may generate at least one of input data and output data based on a user's input in response to the provided analysis result.

FIG. 3 is a diagram illustrating a process of generating pre-processed training data when training data is speech data.

For convenience of explanation, it is assumed that the training data includes speech data, and that a screen 510 shown in FIG. 3 is displayed on the first user terminal 200. In addition, it is assumed that the input data included in the pre-processed training data is speech data, and that the output data is text data corresponding to the speech data.

Under the above-described premise, the controller 120 according to an embodiment may generate visualization data from the speech data. For example, the controller 120 may generate visualization data in the form of a graph shown in a visualization data display area 511 of FIG. 3 from the speech data. In this case, the visualization data in the form of a graph may show a pitch, volume, frequency, etc. of the sound of the speech data over time. However, this is merely an example, and the spirit of the present disclosure is not limited thereto.

The controller 120 according to an embodiment may generate at least one of input data and output data based on a user's input in response to the visualization data. For example, according to a user's input of selecting at least a partial section of the visualization data in a graph form shown in the visualization data display area 511, the controller 120 may generate input data based on speech data included in the corresponding section. For example, the controller 120 may generate input data including only speech data included in the corresponding section.

The controller 120 according to an embodiment may provide an analysis result with respect to a portion of the visualization data that corresponds to the user's input. For example, as shown in an analysis result display area 512 of FIG. 3, the controller 120 may provide, as the analysis result, a result of converting speech data included in the section selected by the user into text. At this time, the controller 120 according to an embodiment may convert the speech data into the text data by using various known techniques.

In an optional embodiment, the user may select a plurality of discontinuous sections in the visualization data display area 511, and the controller 120 may generate input data corresponding to each individual section. In addition, the controller 120 may provide text data corresponding to each input data to the analysis result display area 512.

The controller 120 according to an embodiment may generate at least one of input data and output data based on a user's input in response to the provided analysis result. For example, the controller 120 may select text data provided in the analysis result display area 512 and select (or confirm) the text data as output data.

In addition, the controller 120 may select text data provided in the analysis result display area 512, load the selected text data into an editing area 514 and edit it, and then select (or confirm) the edited text data as output data. However, such a method is merely an example, and the spirit of the present disclosure is not limited thereto.

In an optional embodiment, the controller 120 may provide the input data and the output data that are generated, in correspondence with each other. For example, the controller 120 may display information related to the individual input data and information related to the output data in correspondence with each other in a data status display area 513. For example, when displaying the input data, the controller 120 may display information on a section of the training data in which the input data is located, and an interface for reproducing a speech in the section. In addition, when displaying the output data, the controller 120 may display the text data generated from the input data. However, this is merely an example, and the spirit of the present disclosure is not limited thereto.

FIG. 4 is a diagram illustrating a process of generating pre-processed training data when training data is image data.

For convenience of explanation, it is assumed that the training data includes image data, and that a screen 520 shown in FIG. 4 is displayed on the first user terminal 200. In addition, it is assumed that the input data included in the pre-processed training data is image data, and that the output data is information on selection of at least a partial area of the image data and a tag for the area.

Under the above-described premise, the controller 120 according to an embodiment may generate visualization data from the image data. For example, the controller 120 may correct the image data according to a preset method to generate visualization data in the form of the image shown in a visualization data display area 522 of FIG. 4.

In this case, to "correct (something) according to a preset method" may mean changing at least one attribute value of an image to a preset value. For example, to "correct (something) according to a preset method" may mean changing the sharpness of the image to a preset value or changing the image size to a preset value. However, this is merely an example, and the spirit of the present disclosure is not limited thereto.

The controller 120 according to an embodiment may generate at least one of input data and output data based on a user's input in response to the visualization data. For example, in the case where the user selects at least a partial area of the image shown in the visualization data display area 522 and inputs (or selects) a tag for the selected area, the controller 120 may generate output data including characteristic information of the area and tags for the area. In this case, the user may select at least a partial area of the image shown in the visualization data display area 522 and select any one of the tags displayed on a tag selection area 521 to perform an area selection and a tag input for the area. In other words, the controller 120 according to an embodiment generate output data based on a user's input of selecting any one of the tags displayed in the tag selection area 521 and a user's input of selecting at least a partial area of the image shown in the visualization data display area 522.

In an optional embodiment, the controller 120 may provide tools necessary for generating output data together. For example, the controller 120 may provide a tool for enlarging or reducing the visualization data, a tool for changing a display portion of the visualization data, and the like, as displayed on a tool display area 523. However, such tools are exemplary, and the spirit of the present disclosure is not limited thereto.

Meanwhile, FIGS. 3 and 4 show an example in which the training data is speech data or image data, but the spirit of the present disclosure is not limited thereto. For example, even when the training data is text data, the controller 120 according to an embodiment may generate visualization data corresponding to the text data and may receive at least one of input data and output data based on a user's input in response to the visualization data.

The controller 120 according to an embodiment may train an artificial neural network model by using training data pre-processed according to the above-described process (hereinafter sometimes referred to as "pre-processed data"), in operation S820.

To this end, the controller 120 according to an embodiment may provide a first interface for selecting a type of an artificial neural network model to be trained, in operation S821.

FIG. 5 shows an example of a screen 530 in which a first interface is provided to the first user terminal 200.

The controller 120 according to an embodiment may provide, to the first user terminal 200, a first interface listing types of artificial neural network models that may be selected by a user, as shown in FIG. 5.

The user may select an appropriate type from the listed types considering a data type used in a service he or she intends to generate, a method of processing the data, or the like. For example, when the user wants to generate a service using image data, a first type 531 may be selected.

In addition, when there is no type that corresponds to the service he or she wants to create, the user may select a fourth type 532 to generate a personalized artificial neural network model type.

However, a configuration of the first interface shown in FIG. 5 is an example, and the spirit of the present disclosure is not limited thereto.

The controller 120 according to an embodiment may provide a second interface for setting at least one parameter of the artificial neural network model according to the type selected from the first interface, in operation S822.

FIG. 6 shows an example of a screen 540 in which a second interface 542 is provided to the first user terminal 200.

The controller 120 according to an embodiment may provide the second interface 542 for setting at least one parameter for the artificial neural network model according to the type selected from the first interface. For example, the controller 120 may provide the second interface 542 including an interface for setting an epoch of the artificial neural network model, an interface for setting a batch size, and an interface for setting a learning rate.

Meanwhile, the controller 120 according to an embodiment may provide a third interface 541 in which the input data and the output data included in the pre-processed data are displayed in correspondence with each other, along with the second interface 542 described above, in operation S823.

For example, when providing first pre-processed data 541-1, the controller 120 may display input data 541-1b and output data 541-1a in correspondence with each other as shown in FIG. 6. Of course, the controller 120 may provide the other pre-processed data in the same manner as when providing the first pre-processed data 541-1. However, the display format illustrated in FIG. 6 is an example, and a method of providing the third interface 541 is not limited thereto.

The controller 120 according to an embodiment may provide a fourth interface 543 for inputting test input data to the artificial neural network model and providing test output data for the input test input data, in operation S824.

The controller 120 according to an embodiment may provide the fourth interface 543 together with at least one of the aforementioned second and third interfaces 541 and 542, or may provide only the fourth interface 543 alone. In addition, although it is described that the first to fourth interfaces are provided in sequence, an order or method of providing the interfaces is not limited thereto. Accordingly, the controller 120 may provide the first to fourth interfaces at the same time, or may provide some interfaces first and the other ones later.

Meanwhile, as shown in FIG. 6, the fourth interface 543 may include an interface 543-1 on which the user inputs test input data or on which the input test input data is displayed, an interface 543-2 in which test output data corresponding to the input test data is displayed, and an interface 543-3 for finally generating an artificial neural network model.

When displaying the test output data on the interface 543-2, the controller 120 according to an embodiment may display a plurality of pieces of output data, but may also display a probability that each output data is a correct answer.

Meanwhile, when a user input to the interface 543-3 according to an embodiment is obtained, the neural network model type selected from the first interface may be set according to the parameter set from the second interface 542, and the artificial neural network model may be trained using the pre-processed training data displayed on the third interface 541. The trained artificial neural network model may be used as a component of a service in generating a service, and a detailed description thereof will be described later below.

The controller 120 according to an optional embodiment may allocate resources to be used in training the artificial neural network model or resources to be used in driving a service using the trained artificial neural network model, according to a certain rule.

At this time, the "certain rule" may be a rule for adjusting a size of resources allocated based on at least one of whether the first user terminal 200 has been charged, the amount of charge, the degree of idleness of resources managed by the server 100, the idle schedule, and the size (or volume) of pre-processed training data.

The controller 120 according to an embodiment may generate a service according to an input of editing one or more components of a service and an input of setting a connection relationship between the one or more components, in operation S830.ln this case, the artificial neural network model trained according to the above-described process may correspond to one of the service components.

FIG. 7 is a diagram illustrating a screen 550 on which interfaces 551, 552, and 553 for generating a service according to a user's input are displayed.

The controller 120 according to an embodiment may provide a fifth interface 551 displaying objects respectively corresponding to one or more candidate components that may be added to the service, in operation S831.

In addition, the controller 120 according to an embodiment may provide a sixth interface 552 listing objects respectively corresponding to one or more components of the service, in operation S832.At this time, the fifth interface 551 and the sixth interface 552 may be provided together as shown in FIG. 7.

The controller 120 according to an embodiment may add an object selected from the fifth interface 551 to the sixth interface 552 and may add a component corresponding to the selected object to a service being generated, in operation S833.For example, according to a user's input to the fifth interface 551, the controller 120 may add a voice recognition object 552-1 to the sixth interface 552, and thus, may add a component corresponding to the voice recognition object 552-1 to the service.

In an optional embodiment, according to a user's input of dragging an object selected from the fifth interface 551 to the sixth interface 552, the controller 120 may add the object to the sixth interface 552. Of course, even in this case, the controller 120 may add a component corresponding to the voice recognition object 552-1 to the service being generated.

Meanwhile, the fifth interface 551 may include an object corresponding to an artificial neural network model generated according to the above-described process. The user may add the corresponding object to the service so that a service based on an artificial neural network may be generated.

According to a user's input of connecting a first object to a second object on the sixth interface 552, the controller 120 according to an embodiment may associate a component corresponding to the first object with a component corresponding to the second object, in operation S834.For example, according to a user's input of connecting the first object and the second object to each other, the controller 120 may determine output data of the component corresponding to the first object as input data of the component corresponding to the second object.

For example, when an object obtaining a speech according to a user's input and an artificial neural network model object generating text corresponding to the speech are associated with each other, the controller 120 may determine the obtained speech data as input data of the artificial neural network model. However, this is merely an example, and the spirit of the present disclosure is not limited thereto.

The controller 120 according to an embodiment may execute the service according to a user's input to an execution button 552-2 on the sixth interface 552. In this case, the controller 120 according to an embodiment may sequentially execute a component corresponding to each object by considering a connection relationship between the objects on the sixth interface 552.

In another embodiment, when the service is executed according to a user's input to the execution button 552-2, the controller 120 may display an object corresponding to the currently executed service component to be distinguished from the other objects. For example, the controller 120 may highlight and display the object corresponding to the currently executed service component.

In addition, in an optional embodiment, the controller 120 may display an object corresponding to the service component, input data of the component, and output data of the component together.

The controller 120 according to an embodiment may provide a seventh interface 553 for setting at least one attribute value of a component corresponding to an object selected from one of the fifth interface 551 and the sixth interface 552. At this time, the fifth interface 551, the sixth interface 552, and the seventh interface 553 may be provided together as shown in FIG. 7.

The user may change attribute values of individual components of the service through the seventh interface 553. For example, the user may change an attribute value of the voice recognition object 552-1 through an interface 553-1. However, this is merely an example, and the spirit of the present disclosure is not limited thereto.

The controller 120 according to an embodiment may change an attribute value of a component corresponding to the selected object according to a user's input to the seventh interface 553.

The embodiments described above may be implemented in the form of a computer program that may be executed through various elements on a computer, and such a computer program may be recorded in a computer-readable medium. In this case, the medium may store a program executable by a computer. Examples of the media include magnetic media such as hard disks, floppy disks, and magnetic tapes, optical recording media such as CD-ROMs and DVDs, magneto-optical media such as floptical disks, and ROM, RAM, flash memory, and the like, which store program instructions.

Meanwhile, the computer program may be specially designed and configured for the present disclosure, or may be known and available to a person of skill in the computer software field. Examples of the computer program may include not only machine language codes such as those produced by a compiler, but also high-level language codes that may be executed by a computer using an interpreter or the like.

According to embodiments, it is possible to generate a high-level artificial intelligence utilization service without specialized knowledge of artificial intelligence.

In addition, according to embodiments, it is possible for the user to easily generate training data for training an artificial neural network model from his or her own data or original data that he or she intends to use.

In addition, according to embodiments, the user may generate a personalized artificial neural network model by training an artificial neural network model selected by the user with his or her own training data.

In addition, according to the present disclosure, the user may easily generate a service by easily adding and deleting components of a service. In particular, a personalized artificial neural network model may be provided as a component that may be selected when generating a service, so that artificial intelligence may be easily introduced to the service.

The certain implementations described in the present disclosure are examples and do not limit the scope of the present disclosure in any way. For brevity of the specification, descriptions of related-art electronic configurations, control systems, software, and other functional aspects of the systems may be omitted. In addition, the connection or connection members of lines between the components shown in the drawings are just examples of functional connections and/or physical or circuit connections, and may also indicate replaceable or additional various functional connections, physical connections, or circuit connections in an actual device. In addition, if there is no specific mention such as "essential" or "important," it may not be an essential component for the application of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A method of generating a service by using an artificial neural network model, the method comprising:
a data processing step of pre-processing training data;
a model training step of training the artificial neural network model based on the preprocessed training data; and
a service making step of receiving an input for editing one or more components included in the service and an input for setting a connection relationship between the one or more components, wherein the one or more components comprise the artificial neural network model.

2. The method of claim 1, wherein the data processing step comprises:
obtaining the training data; and
generating pre-processed training data including input data and output data based on the training data and a user's input.

3. The method of claim 2, wherein the generating the pre-processed training data comprises:
generating visualization data corresponding to the training data; and
generating at least one of the input data and the output data based on a user's input in response to the visualization data.

4. The method of claim 3, wherein the generating the pre-processed training data comprises:
providing an analysis result with respect to a portion of the visualization data corresponding to the user's input; and
generating at least one of the input data and the output data based on a user's input in response to the analysis result.

5. The method of claim 1, wherein the model training step comprises:
providing a first interface for selecting a type of the artificial neural network model; and
providing a second interface for setting at least one parameter for the artificial neural network model according to the selected type.

6. The method of claim 5, wherein the model training step further comprises:
providing a third interface for providing the pre-processed training data in a form in which input data and output data correspond to each other.

7. The method of claim 5, wherein the model training step further comprises:
providing a fourth interface for inputting test input data to the artificial neural network model and providing test output data for the test input data.

8. The method of claim 1, wherein the service making step comprises:
providing a fifth interface displaying objects respectively corresponding to one or more candidate components that are addable to the service; and
providing a sixth interface listing objects corresponding to one or more components included in the service.

9. The method of claim 8, wherein the service making step further comprises:
adding an object selected from the fifth interface to the sixth interface, and adding a component corresponding to the selected object to the service; and
associating a component corresponding to a first object and a component corresponding to a second object according to a user's input connecting the first object and the second object to each other on the sixth interface.

10. The method of claim 9, wherein the associating the component corresponding to the first object and the component corresponding to the second object comprises determining output data of the component corresponding to the first object as input data of the component corresponding to the second object.

11. The method of claim 8, wherein the service making step further comprises:
providing a seventh interface for setting at least one attribute value of a component corresponding to an object selected from one of the fifth interface and the sixth interface; and
changing an attribute value of the component corresponding to the selected object according to a user's input to the seventh interface.
